# FASCICULE DE BREVET EUROPEEN

(11) **EP 0 415 858 B1**
(45) Date de publication et mention de la délivrance du brevet: **25.01.1995**
(21) Numéro de dépôt: 90420388.2
(22) Date de dépôt: 28.08.1990
(51) Int. Cl.: H05H 1/42

(54) **Réacteur à plasma pour le traitement de matériaux à très haute température**
Plasmareaktor zur Hochtemperaturbehandlung von Materialien
Plasma reactor for high-temperature treatment of materials

(30) Priorité: 29.08.1989 US 399997
(43) Date de publication de la demande: 06.03.1991
(73) Titulaire: HYDRO QUEBEC, Montréal H2Z 1A4, Québec (CA)
(72) Inventeur: Drouet, Michel G., St. Bruno, J3V 4M7, Québec (CA); Choi, Hyun K., St. Lambert, Québec (CA)
(74) Mandataire: Bratel, Gérard

(56) Documents cités:
- EP-A- 0 071 351
- FR-A- 2 539 942
- US-A- 3 856 918
- US-A- 4 002 466
- PLASMA CHEMISTRY AND PLASMA PROCESSING, vol. 9, no. 1, mars 1989, pages 85S-117S, New York, US; D.R. MAC RAE: "Plasma arc process systems. Reactors and applications"

## Description

La présente invention concerne un réacteur à plasma amélioré qui peut être utilisé pour le traitement à très haute température de minerais ou autres composés métalliques ou non métalliques dans le but de les transformer physiquement et chimiquement.

Les réacteurs à plasma sont des appareils très bien connus qui ont fait l'objet de beaucoup de recherches et de développements au cours des dernières décades. Par définition, de tels réacteurs utilisent un plasma qui forme, entre des électrodes, un arc en forme de colonne qui génère une chaleur suffisante pour chauffer, à haute température, les minéraux ou composés à être traités et ainsi permettre d'obtenir des réactions que l'on ne saurait obtenir autrement. Le plasma qui forme la colonne d'arc consiste en un mélange de molécules énergisées et/ou dissociées, d'ions chargés positivement et d'électrons libres obtenus d'un gaz (appelé ci-après "gaz plasmagène") soumis à une ionisation partielle au moyen d'un arc électrique (généralement : courant continu) créé entre une anode et une cathode.

En pratique, le gaz plasmagène est souvent utilisé comme réactif. Ainsi, par exemple, l'oxygène ou l'air peut être utilisé dans le cas d'une oxydation. Le monoxyde de carbone ou l'hydrogène peut être utilisé pour obtenir une réduction. Le chlore peut être utilisé pour une chloration et l'azote pour une nitration.

Les réacteurs à plasma actuellement disponibles font usage de dispositifs que l'on appelle "torches à plasma" pour amorcer et maintenir l'arc à plasma dans le réacteur. Ces torches à plasma peuvent être de deux conceptions différentes.

Selon l'une de ces conceptions, ci-après appelée "torche creuse", la torche à plasma comporte deux électrodes tubulaires faites de cuivre ou d'acier inoxydable qui sont coaxiales et dont les extrémités sont maintenues à distance par un petit anneau isolant. Le gaz plasmagène est injecté entre les électrodes par un trou prévu dans l'anneau isolant. L'arc à plasma créé par l'arc qui se forme entre les électrodes sort de la torche dont les électrodes agissent comme une buse, et crée un jet ayant une très grande vitesse.

Il est de pratique courante d'injecter le gaz tangentiellement dans une telle torche creuse afin de créer un vortex et de stabiliser ainsi l'arc de la buse. Il est aussi courant, dans certains cas, d'utiliser des bobines magnétiques autour de l'une ou des deux électrodes. Ceci a pour effet de faire tourner les points de liaison de l'arc aux électrodes et permet de réduire ainsi les risques d'érosion de la surface des électrodes. Il est également courant de refroidir les électrodes au moyen de chemises d'eau pour en augmenter la durée.

Selon une autre conception ci-après appelée "torche pleine", la torche à plasma comporte une cathode pleine en forme de pointe de tungstène, retenue par un isolant au centre d'une anode creuse. Le gaz plasmagène est injecté dans l'espace annulaire compris entre la pointe de tungstène et l'anode qui l'entoure.

Là encore, il est de pratique courante d'incorporer à une telle torche des moyens réfrigérants pour en prolonger la vie des composants et plus particulièrement les pointes de tungstène.

Quelle que soit la conception de la torche à plasma utilisée dans le réacteur, il y a deux façons différentes d'utiliser cette torche et d'opérer le réacteur.

La première de ces deux façons consiste à utiliser la torche pour produire un arc à plasma qui est projeté sur la substance à traiter pour la chauffer à la température requise par le traitement. Selon cette approche, la colonne d'arc à plasma s'étend de l'anode à la cathode encastrées de la torche, tout en se trouvant soufflée hors de celle-ci à une distance dépendant de la vitesse du gaz plasmagène injecté pour ainsi former une boucle allongée.

L'autre façon d'utiliser la torche consiste à générer un arc à plasma entre les électrodes encastrées de la torche au début du procédé et, une fois l'arc généré, à transférer celui-ci au matériau à traiter ou traité qui se trouve habituellement sous forme fondue au fond du réacteur. Un tel transfert d'arc est obtenu, en pratique, en commutant le raccordement à la source d'énergie, de l'électrode aval (dans le cas d'une torche creuse) ou de l'anode-manchon (dans le cas d'une torche pleine), à une autre électrode qui est habituellement une anode en contact avec le bain de matériau fondu au fond du réacteur.

Evidemment, ce transfert d'arc n'est possible que si le matériau fondu est conducteur de l'électricité. Cependant, lorsque l'on utilise un tel transfert, on en retire plusieurs avantages :
- il n'y a plus de perte de chaleur à l'anode ;
- la puissance de l'arc se fait de façon plus uniforme à l'intérieur du réacteur, et
- le bain au fond du réacteur demeure chaud (bien qu'il puisse surchauffer à l'endroit où frappe l'arc).

Le brevet U.S. n° 3.856.918, délivré au nom d'American Cyanamid Company, décrit un réacteur à plasma à arc soufflé, qui utilise une torche pleine ou creuse montée axialement au sommet du manchon vertical. Le matériau à traiter est injecté pneumatiquement selon un angle au sommet du manchon, immédiatement sous la torche, de façon à frapper la paroi interne du manchon et à s'y écouler pour tomber dans un creuset pendant que le matériau est chauffé par la flamme de plasma soufflée par la torche dans le manchon.

Le brevet U.S. n° 4.002.466 délivré au nom de Bethlehem Steel Corporation décrit un réacteur à plasma à arc transféré comportant une torche pleine montée axialement au sommet d'un manchon vertical ou "collimateur". L'arc est transféré de la pointe cathodique de la torche à la paroi interne du collimateur qui est raccordé à la source électrique et joue le rôle d'anode. Le matériau à traiter est injecté pneumatiquement tangentiellement près du sommet du collimateur et forme un film qui s'écoule le long de la surface interne du collimateur. L'arc frappe ce film au hasard tandis qu'il s'écoule et ainsi chauffe le matériau à la température de traitement désirée, avant qu'il ne tombe dans le creuset. Le principal avantage de ce réacteur est que le film, en s'écoulant, protège la surface interne du collimateur agissant comme anode, et en réduit ainsi le taux d'érosion. Il agit également en tant qu'isolant thermique et réduit de ce fait les pertes de chaleur de l'anode, laquelle est refroidie extérieurement.

Les brevets U.S. n 3.932.171 et 4.154.972, tous deux délivrés au nom de Tetronics Research and Development Company Ltd., décrivent un réacteur à plasma à arc transféré dans lequel la colonne d'arc est transférée de la cathode d'une torche creuse à un bain de matériau fondu en contact avec une anode annulaire. La torche creuse est montée selon un angle au sommet du réacteur et déplacée en orbite autour d'un axe vertical coaxial à l'anode de façon à viser constamment cette dernière. On laisse tout simplement tomber le matériau sous traitement dans le réacteur au travers d'ouvertures entourant la torche au sommet du réacteur pour former un "rideau" qui s'écoule et qui est essentiellement cylindrique et uniforme, ce rideau étant balayé et chauffé par la colonne d'arc à plasma pendant que la torche tourne.

Enfin, le brevet U.S. n° 4.466.824, délivré au nom de Noranda Mines Ltd. puis cédé à Hydro-Québec, décrit un réacteur à plasma à arc transféré d'une conception semblable à celle décrite dans le brevet U.S. n° 4.002.466, si ce n'est que l'anode est située au fond du creuset dans lequel tombe le matériau en fusion sécoulant le long du manchon ou du collimateur. Bien entendu, le collimateur dans lequel le matériau à traiter est injecté tangentiellement est isolé électriquement du bain anodique, de sorte que l'arc passe au travers du manchon entre la pointe cathodique de la torche et le bain, qui est formé par les gouttes du matériau ayant fondu le long du manchon sous la chaleur dégagée par la colonne d'arc à plasma. Dans cette réalisation, la torche pleine est déplaçable verticalement pour amener la pointe de tungstène cathodique près du bain et ainsi amorcer le procédé. Le matériau sous forme pulvérulente est projeté par un gaz porteur contre la paroi interne du manchon pour former un film ruisselant qui agit avantageusement comme protecteur et ainsi limite l'usure de la surface du manchon tout en réduisant les pertes de chaleur.

Le principal avantage du réacteur décrit dans ce brevet U.S. n°4.466.824 à comparer aux autres conceptions connues, incluant celle du brevet U.S. n° 4.002.466 est essentiellement qu'il accroît le rendement thermique du procédé. Cependant, le réacteur du brevet U.S. n° 4.466.824 a l'inconvénient majeur, au vu des autres réacteurs du même type, d'exiger la présence d'un gaz porteur à une pression substantielle pour déplacer le matériau à traiter dans une tuyauterie d'alimentation allant d'une trémie d'emmagasinage au réacteur, pour ensuite injecter tangentiellement ce matériau à une vitesse suffisante pour créer un film ruisselant uniforme couvrant toute la surface interne du manchon.

Un but de la présente invention est de fournir un reacteur à plasma n'ayant pas les inconvénients précités des réacteurs connus.

Plus particulièrement, le but de l'invention est de fournir un réacteur à plasma de conception améliorée, qui combine des caractéristiques jusqu'ici incompatibles avec les divers réacteurs existants de type à arc soufflé et à arc transféré, et ceci d'une manière si avantageuse qu'elle évite la plupart des inconvénients précités.

Un autre but de l'invention est de fournir un réacteur à plasma qui soit complètement convertible, de façon à ce qu'il puisse être utilisé à volonté pour le traitement à arc soufflé ou à arc transféré et vice-versa.

Selon l'invention, ces buts sont atteints avec un réacteur à plasma pour le traitement, à très haute température, d'un matériau sous forme pulvérulente, ce réacteur comprenant :
- un manchon vertical isolé électriquement, ayant une extrémité supérieure, une extrémité inférieure et une paroi interne cylindrique ;
- une torche montée coaxialement à l'extrémité supérieure du manchon, cette torche comportant au moins une électrode dite "primaire" coaxiale au manchon et utilisable pour la production d'une colonne d'arc à plasma ;
- des moyens pour amener le matériau à traiter dans le manchon ;
- un creuset situé dous le manchon pour capter les particules traitées en fusion, qui dégouttent de l'extrémité inférieure du manchon, et
- une autre électrode dite "secondaire" coopérant avec l'électrode primaire précitée de la torche pour créer cette colonne de plasma lorsque les électrodes sont reliées adéquatement à une source d'énergie électrique.

Selon l'invention, le réacteur est caractérisé en ce que :
- la torche du réacteur est une torche creuse ;
- des moyens sont prévus pour injecter un gaz tangentiellement à l'intérieur de la torche creuse de façon à y créer un vortex et ainsi stabiliser la colonne d'arc à plasma s'étendant depuis ladite électrode primaire ; et
- les moyens pour amener le matériau en poudre dans le manchon sont conçus pour amener et laisser tomber par gravité le matériau en poudre à l'extrémité supérieure du manchon tout autour de la torche creuse de façon à former un revêtement, essentiellement cylindrique et uniforme de particules tombant dans le manchon, ces particules étant projetées contre la paroi interne du manchon par la force centrifuge exercée par le vortex s'échappant de la torche creuse et recouvrant entièrement ladite roi interne pour ainsi la protéger tout en se trouvant traitées par la colonne de plasma.

Comme on peut le comprendre, le réacteur à plasma selon l'invention ne fait pas appel à une injection pneumatique du matériau en haut du manchon et, par conséquent, ne nécessite pas l'usage d'un gaz porteur sous pression pour alimenter en matériau le sommet du manchon. Il fait plutôt usage d'un système d'alimentation du matériau qui peut être celui des brevets U.S. n° 3.932.171 et 4.154.972, lequel système est très simple et efficace et beaucoup moins sujet à blocage que le système d'injection pneumatique tangentielle.

Le réacteur à plasma selon l'invention utilise aussi une torche creuse de structure conventionnelle plutôt qu'une torche pleine, laquelle torche creuse est reconnue pour durer plus longtemps que les torches pleines dont les pointes de tungstène doivent être changées fréquemment.

Selon l'invention, les particules du matériau à traiter sont projetées contre la paroi interne du manchon exclusivement par le vortex produit à à l'intérieur de la torche creuse par le gaz à plasma, ce vortex "se déployant" lorsqu'il s'échappe de la torche.

Selon l'endroit où est située l'autre électrode, le réacteur à plasma selon l'invention peut fonctionner en tant que réacteur à plasma à arc transféré ou en tant que réacteur à plasma à arc soufflé.

Lorsque le réacteur fonctionne en mode arc transféré, l'autre électrode est située dans le creuset et est en contact électrique avec le matériau fondu capté par le creuset de façon à causer un transfert d'arc de l'électrode tubulaire primaire de la torche creuse au matériau fondu pendant que la colonne d'arc à plasma s'étend verticalement au travers du manchon. On peut souligner, dans ce mode particulier, que l'autre électrode dans le creuset n'a pas nécessairement à être une anode tel que décrit dans le brevet U.S. n° 4.466.824. Cette autre électrode peut, en fait, être ou bien l'anode ou bien la cathode selon la polarité de l'électrode dans la torche creuse.

Lorsque le réacteur fonctionne en mode arc soufflé, l'arc n'est pas transféré au matériau. L'autre électrode est alors tout simplement une autre électrode tubulaire, intégrée comme composant standard à la torche creuse.

Avantageusement, le réacteur à plasma selon l'invention peut incorporer ces deux types d'électrodes ensemble avec des moyens appropriés connus en soi pour relier l'une ou l'autre de ces deux "autres" électrodes à la source de courant. Ainsi, le réacteur à plasma devient pleinement convertible et peut être utilisé selon l'un ou l'autre des modes précités, en fonction du type de matériau à traiter, comme par exemple, le verre qui n'est pas conducteur.

Dans tous les cas, les moyens utilisés pour amener et laisser tomber le matériau en poudre dans le manchon peuvent inclure un jet d'ouvertures situé autour de la torche creuse au sommet du manchon, ouvertures au travers desquelles on laisse tomber le matériau en poudre essentiellement par gravité dans le manchon, près de la paroi interne de ce dernier. Le matériau peut être amené aux ouvertures directement, au moyen d'une vis sans fin ou tout autre moyen semblable, partant du fond d'une trémie de stockage du matériau. En variante, on peut amener le matériau de façon pneumatique mais à basse pression, comme cela est suggéré dans le brevet U.S. n° 4.154.972.

Les principaux avantages que l'on peut tirer du réacteur à plasma selon l'invention faisant usage d'une torche creuse capable de produire un vortex, plutôt que d'une torche à pointe de tungstène, sont les suivants :
a) L'usage d'une électrode à pointe de tungstène nécessitant un gaz plasmagène spécial et une protection contre l'oxydation est éliminé.
b) Tout gaz peut être utilisé dans le procédé. Par exemple, le monoxyde de carbone peut être utilisé, qui est un bon gaz réducteur compatible avec l'électrode de cuivre de la torche creuse standard.
c) La torche creuse utilise plus de gaz plasmagène que la torche à tungstène. Le débit plus élevé de gaz produit une force tangentielle qui aide à l'alimentation du matériau par injection. Il en résulte que des matériaux de grosseur variable peuvent être acheminés par la tuyauterie d'alimentation.
d) Il est connu que les torches creuses donnent une colonne d'arc à plasma stable. On peut ainsi avoir recours à un manchon plus long pour un temps de séjour amélioré pour le traitement ou la fusion.
e) Il est très facile de réamorcer la torche creuse en cas de brisure d'arc, en comparaison à une torche pleine où l'on craint toujours que la pointe de tungstène ne s'oxyde.

L'invention sera mieux comprise à la lecture de la description non limitative qui suit d'un mode de réalisation préféré de l'invention, faite en se référant aux dessins annexés dans lesquels :
La figure 1 est une vue schématique en coupe verticale d'un réacteur à plasma construit selon l'invention, et
La figure 2 est une vue schématique en coupe verticale de la torche creuse utilisée dans le réacteur à plasma de la figure 1.

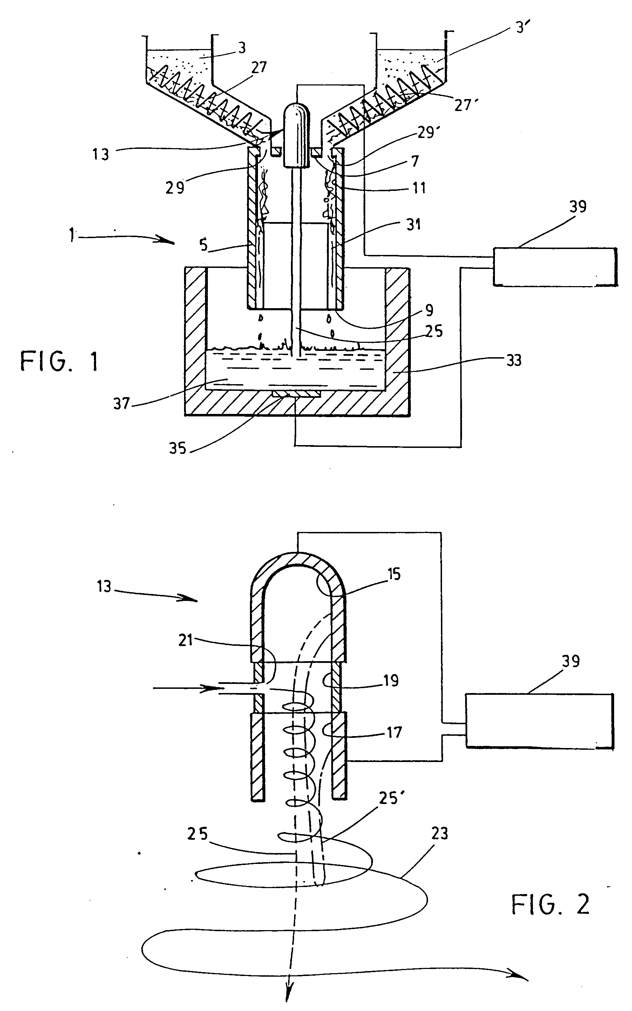

Le réacteur à plasma 1 selon l'invention tel qu'illustré dans la figure 1 est destiné à être utilisé pour le traitement d'un matériau emmagasiné sous forme de poudre dans des trémies 3 de stockage disposées préférablement au-dessus du réacteur.

Le réacteur 1 comporte un manchon vertical 5, isolé électriquement, lequel a une extrémité supérieure 7 obturée par une paroi, une extrémité inférieure 9 et une paroi interne 11 cylindrique.

Le réacteur 1 comporte aussi une torche creuse 13 qui est illustrée en détail sur la figure 2. Cette torche 13, qui est montée coaxialement au manchon 5 au sommet de celui-ci, comporte deux électrodes tubulaires 15 et 17 qui peuvent être faites en cuivre ou en acier inoxydable ou en tout autre matériau approprié. Ces deux électrodes 15 et 17 sont disposées coaxialement l'une au-dessus de l'autre et sont séparées l'une de l'autre par un petit anneau 19 isolant, ayant au moins un orifice 21 au travers duquel un gaz tel que l'azote, l'oxyde de carbone ou un gaz similaire, peut être injecté tangentiellement, de façon à créer un vortex de gaz illustré par la ligne fléchée 23 à l'intérieur et à l'extérieur de la torche creuse 13. La structure fondamentale de cette torche creuse est bien connue en soi et des torches de ce genre sont commercialisées par diverses firmes, par exemple, la société Plasma Energy Corporation.

L'avantage de l'injection tangentielle de gaz dans une torche creuse réside essentiellement en ce qu'elle produit, à l'intérieur, un vortex 23 qui permet de stabiliser la colonne d'arc à plasma 25 ou 25′ produit par cette torche, comme on l'expliquera ci-après.

Le réacteur 1 comporte en outre des moyens permettant d'amener et de laisser tomber, verticalement vers le bas et à l'intérieur du manchon 5, le matériau en poudre qui est contenu dans les trémies 3, 3′. Ces moyens, qui peuvent être des convoyeurs à vis sans fin 27, 27′, poussent le matériau du fond des trémies 3, 3′, au travers d'ouvertures 29, 29′, prévues dans la paroi supérieure 7 du manchon 5, tout autour de la torche 13, près de la paroi interne 11 de celle-ci, de façon à créer un revêtement essentiellement uniforme et cylindrique 31 de particules de matériau qui tombent par gravité dans le manchon 5.

En pratique, ces particules sont plaquées contre la paroi interne 11 du manchon 5 par la force centrifuge du vortex 23 qui s'échappe de la torche creuse 13 et se dilate immédiatement à la sortie de l'électrode 17. Il en résulte que ces particules recouvrent complètement la paroi interne 11 et la protègent en même temps qu'elles sont traitées par la colonne d'arc à plasma créée à l'intérieur du réacteur.

Le réacteur comprend en outre un creuset 33 disposé sous le manchon pour recueillir les particules traitées et fondues qui dégouttent de l'extrémité inférieure du manchon 5. Le creuset 33 peut être muni, en son fond, d'une électrode 35 en contact avec le matériau fondu recueilli sous forme d'un bain 37 à l'intérieur du creuset.

Selon un premier mode de fonctionnement de l'invention, l'électrode 35 est activée en la reliant à une source d'énergie électrique 39 pour ainsi coopérer avec une des deux électrodes annulaires de la torche 13, comme l'électrode 15 par exemple, qui joue le rôle d'électrode primaire, pour produire la colonne d'arc à plasma 25 qui s'étend alors de l'électrode 15 jusqu'au bain 37. Dans ce mode de fonctionnement, le réacteur à plasma fonctionne selon le mode dit à arc transféré où l'arc à plasma obtenu s'étend verticalement de l'extrémité supérieure de la torche 13 jusqu'au matériau fondu formant le bain 37.

Selon un autre mode possible de fonctionnement, qui peut être utilisé soit pour amorcer la colonne d'arc à plasma avant qu'elle ne soit transférée, soit pour certaines autres applications où, par exemple, le matériau à traiter n'est pas conducteur, l'autre électrode reliée avec l'électrode 15 à la source 39, est l'autre électrode tubulaire 17 de la torche 13. Dans ce cas particulier, l'arc 25′ (voir la figure 2) n'est pas transféré mais simplement soufflé par le gaz plasmagène pour former une boucle émergeant de la torche 13 pour se prolonger vers le bas, au centre et à l'intérieur du manchon 5. Bien entendu, cet arc soufflé, qui s'étend tel qu'expliqué ci-dessus dans le manchon 5, chauffe celui-ci et amène le revêtement de particules qui tombent dans les ouvertures 29 et 29′ à fondre et à réagir. On peut avantageusement prévoir des moyens (non illustrés) pour connecter les électrodes 17 et 35 et les placer hors circuit à volonté.

Les applications industrielles du réacteur à plasma décrit ci-dessus sont évidemment les mêmes que celle des réacteurs connus, comme ceux faisant l'objet des brevets U.S. dont il est brièvement question dans l'introduction de la présente description. Toutes ces applications, telles que la réduction d'oxyde métallique (minerai de fer, alumine), etc., la valorisation de minerai titanifère, l'agglomération ou la fusion de minerais particulaires comme les céramiques, etc... sont bien connues dans ce domaine et il n'est pas nécessaire d'insister.

De même, tous les systèmes de contrôle et/ou de sécurité de fonctionnement (système de purification du gaz, amorceur d'arc, système pour déplacer verticalement la torche à l'intérieur du manchon, refroidissement de l'eau, etc...) qui peuvent être incorporés au réacteur à plasma selon la présente invention pour le rendre acceptable industriellement, sont bien connus dans l'état de la technique et ne méritent pas d'être décrits en détails, l'invention étant ici limitée à ce qui est énoncé dans les revendications annexées.

## Revendications

1. Réacteur à plasma utilisable pour le traitement à très haute température d'un matériau en poudre, ce reacteur comportant :
- un manchon vertical (5) isolé électriquement, ce manchon ayant une extrémité supérieure (7), une extrémité inférieure (9) et une paroi interne cylindrique (11) ;
- une torche (13) montée coaxialement à l'extrémité supérieure (7) du manchon (5), cette torche comportant au moins une électrode dite "primaire" (15, 17) coaxiale au manchon (5) et utilisable pour la production d'une colonne d'arc à plasma (25, 25′) ;
- des moyens (27, 27′, 29, 29′) pour amener le matériau en poudre à traiter dans le manchon (5) ;
- un creuset (33) situé sous le manchon (5) pour capter les particules traitées en fusion, qui dégouttent de l'extrémité (9) du manchon (5), et
- une autre électrode dite "secondaire" (17, 35) coopérant avec l'électrode primaire (15, 17) de la torche (13) pour créer ladite colonne de plasma (25, 25′) lorsque lesdites électrodes sont reliées à une source d'énergie électrique (39),
caractérisé en ce que :
- la torche du réacteur (1) est une torche creuse (13) ;
- des moyens (21) sont prévus pour injecter un gaz tangentiellement à l'intérieur de la torche creuse (13) de façon à y créer un vortex (23) et ainsi à stabiliser la colonne de l'arc à plasma (25, 25′) s'étendant depuis ladite électrode primaire (15, 17), et
- les moyens (27, 27′, 29, 29′) pour amener le matériau en poudre dans le manchon (5) sont conçus pour amener et laisser simplement tomber par gravité le matériau en poudre à l'extrémité supérieure (7) du manchon (5) autour de la torche creuse (13) de façon à former un revêtement, essentiellement cylindrique et uniforme (31) de particules tombant dans le manchon (5), lesdites particules en tombant se trouvant projetées contre la paroi interne (11) du manchon (5) par la force centrifuge exercée par le vortex (23) s'échappant de la torche creuse (13) et recouvrant entièrement ladite paroi interne (11) pour ainsi la protéger tout en étant traitées par la colonne de plasma (25, 25′).

2. Réacteur à plasma de la revendication 1 pour le traitement d'un matériau électriquement conducteur, caractérisé en ce que l'électrode secondaire (35) est située dans le creuset (33) en contact électrique avec le matériau fondu (37) contenu dans le creuset (33) pour ainsi provoquer un transfert d'arc de ladite électrode primaire (15, 17) de la torche creuse (13) au matériau fondu (37), la colonne d'arc à plasma (25) produite s'étendant verticalement au travers du manchon (13).

3. Réacteur à plasma de la revendication 2, caractérisé en ce que les moyens pour amener le matériau en poudre dans le manchon (5) incluent un jeu d'ouvertures (29, 29′) autour de la torche creuse (13), à l'extrémité supérieure (7) du manchon (5), ouvertures (29, 29′) au travers desquelles le matériau en poudre est lâché et tombe, essentiellement par gravité, dans le manchon (5) ; près de la paroi interne (11) de celui-ci.

4. Réacteur à plasma de la revendication 1, caractérisé en ce que l'électrode secondaire est une électrode tubulaire (17) faisant partie de la torche creuse (13), les électrodes primaire (15) et secondaire (17) dans la torche (13) étant coaxiales et maintenues à distance l'une de l'autre par un anneau isolant (19) percé d'un trou (21) au travers duquel le gaz plasmagène est injecté à l'intérieur de ladite torche creuse (13).

5. Réacteur à plasma de la revendication 4, caractérisé en ce que les moyens pour amener le matériau en poudre dans le manchon (5) incluent un jeu d'ouvertures (29, 29′) autour de la torche creuse (13), à l'extrémité supérieure (7) du manchon (5), ouvertures (29, 29′) au travers desquelles le matériau en poudre est amené, essentiellement par gravité, dans le manchon (5) près de la paroi interne (11) de celui-ci.

6. Réacteur à plasma de la revendication 1, caractérisé en ce qu'il comprend deux électrodes secondaires (17, 35) pouvant être raccordées, indépendamment l'une de l'autre, à ladite source d'énergie (39) selon le mode d'arc désiré pour le traitement une desdites électrodes secondaires (35) étant située dans le creuset (33) en contact électrique avec le matériau fondu (37) contenu dans le creuset (33) pour ainsi provoquer un transfert d'arc de ladite électrode primaire (15) de la torche creuse (13) au matériau fondu (37), la colonne d'arc à plasma (25) produite s'étendant verticalement au travers du manchon (5) ; l'autre électrode secondaire étant une électrode tubulaire (17) faisant partie intégrante de la torche creuse (13), cette autre électrode secondaire (17) étant coaxiale à ladite électrode primaire (15) et maintenue à distance de celle-ci par un anneau isolant (19) percé d'un trou (21) au travers duquel le gaz plasmagène est injecté à l'intérieur de la torche creuse (13).

7. Réacteur à plasma de la revendication 6, caractérisé en ce que les moyens pour amener le matériau en poudre dans le manchon (5) incluent un jeu d'ouvertures (29, 29′) autour de la torche creuse (13), à l'extrémité supérieure (7) du manchon (5), ouvertures au travers desquelles le matériau en poudre est amené, essentiellement par gravité, dans le manchon (5) près de la paroi interne (11) de celui-ci.

## Patentansprüche

1. Plasmareaktor zum Einsatz bei der Verarbeitung eines pulverförmigen Materiales bei Hochtemperatur, wobei der Reaktor umfaßt:
- einen vertikalen, elektrisch isolierten Rohrstutzen (5), wobei der Rohrstutzen ein oberes Ende (7), ein unteres Ende (9) und eine innere, zylindrische Wand (11) aufweist,
- einen koaxial zum oberen Ende (7) des Rohrstutzens (5) angeordneten Brenner (13), wobei der Brenner mindestens eine sogenannte "primäre" Elektrode (15, 17) umfaßt, die koaxial zum Rohrstutzen (5) angeordnet ist und zur Erzeugung einer Plasmabogensäule (25, 25′) dient;
- Mittel (27, 27′, 29, 29′) zum Zuführen des pulverförmigen Materials zur Verarbeitung in dem Rohrstutzen (5);
- einen unterhalb des Rohrstutzens (5) angeordneten Tiegel (33) zum Auffangen der zum Schmelzen gebrachten Teilchen, die vom Ende (9) des Rohrstutzens (5) abtropfen; und
- eine weitere, sogenannte "sekundäre" Elektrode (17, 35), die mit der primären Elektrode (15, 17) des Brenners (13) zusammenwirkt, um die Plasmabogensäule (25, 25′) zu erzeugen, wenn die Elektroden an eine Quelle (39) elektrischer Energie angeschlossen werden,
dadurch gekennzeichnet, daß:
- der Brenner des Reaktors (1) ein hohler Brenner (13) ist;
- Mittel (21) vorgesehen sind, um ein Gas in tangentialer Richtung in den Innenraum des hohlen Brenners (13) zu injizieren, um dort einen Spiralnebel (23) zu erzeugen und auf diese Weise die Plasmabogensäule (25, 25′) zu stabilisieren, die sich über die primäre Elektrode (15, 17) hinaus erstreckt, und
- die Mittel (27, 27′, 29, 29′) zum Zuführen des pulverförmigen Materiales zum Rohrstutzen (5) so ausgebildet sind, daß das pulverförmige Material mitgenommen und einfach unter Schwerkrafteinfluß zum oberen Ende (7) des Rohrstutzens (5) um den hohlen Brenner (13) herum fallengelassen wird, derart, daß sich ein im wesentlichen zylindrischer und gleichförmiger Mantel (31) von in den Rohrstutzen (5) fallenden Teilchen ausbildet, wobei die Teilchen beim Herabfallen infolge der vom Spiralnebel (23) ausgeübten Fliehkraft gegen die innere Wand (11) des Rohrstutzens (5) geschleudert werden, so daß sie dem hohlen Brenner (13) ausweichen und die innere Wand (11) vollständig bedecken, um dieselbe auf diese Weise zu schützen, wobei die Teilchen gleichzeitig durch die Plasmasäule behandelt werden.

2. Plasmareaktor nach Anspruch 1 zum Verarbeiten eines elektrisch leitfähigen Materiales, dadurch gekennzeichnet, daß die sekundäre Elektrode (35) sich in dem Tiegel (33) im elektrischen Kontakt mit dem im Tiegel (33) befindlichen, geschmolzenen Material (37) befindet, um auf diese Weise einen Übergang des Bogens der primären Elektrode (15, 17) des hohlen Brenners (13) zum geschmolzenen Material (37) zu erreichen, wobei die erzeugte Plasmabogensäule (25) sich in vertikaler Richtung durch den Rohrstutzen (5) hindurch erstreckt.

3. Plasmareaktor nach Anspruch 2, dadurch gekennzeichnet, daß die Mittel zum Zuführen des pulverförmigen Materiales in den Rohrstutzen eine Gruppe von Öffnungen (29, 29′) um den hohlen Brenner (13) herum umfassen, und zwar am oberen Ende (7) des Rohrstutzens (5), wobei das pulverförmige Material durch die Öffnungen (29, 29′) hindurch losgelassen wird und im wesentlichen unter Schwerkrafteinfluß in den Rohrstutzen (5) in der Nähe von dessen innerer Wand (11) fällt.

4. Plasmareaktor nach Anspruch 1, dadurch gekennzeichnet, daß die sekundäre Elektrode eine rohrförmige Elektrode (17) ist, die einen Bestandteil des hohlen Brenners (13) bildet, wobei die primäre Elektrode (15) und die sekundäre Elektrode (17) in dem Brenner (13) koaxial angeordnet und im Abstand zueinander mittels eines isolierenden Ringes (19) gehalten sind, der von einem Loch (21) durchdrungen ist, durch das das Plasma erzeugende Gas in den Innenraum des hohlen Brenners (13) injiziert wird.

5. Plasmareaktor nach Anspruch 4, dadurch gekennzeichnet, daß die Mittel zum Zuführen des pulverförmigen Materiales in den Rohrstutzen (5) eine Gruppe von Öffnungen (29, 29′) um den hohlen Brenner (13) am oberen Ende (7) des Rohrstutzens (5) umfassen, wobei das pulverförmige Material durch die Öffnungen (29, 29′) hindurch im wesentlichen unter Schwerkrafteinfluß dem Rohrstutzen (5) in der Nähe dessen innerer Wand (11) zugeführt wird.

6. Plasmareaktor nach Anspruch 1, dadurch gekennzeichnet, daß er zwei sekundäre Elektroden (17, 35) umfaßt, die unabhängig voneinander an die Energiequelle (39) in Abhängigkeit von dem gewünschten Bearbeitungsbogen anschließbar sind; wobei eine der sekundären Elektroden (35) in dem Tiegel (33) im elektrischen Kontakt mit dem in dem Tiegel (33) enthaltenen geschmolzenen Material (37) steht, um auf diese Weise einen Übergang des Bogens der primären Elektrode (15) von dem hohlen Brenner (13) zum geschmolzenen Material (37) zu übertragen, wobei die erzeugte Plasmabogensäule (25) sich in vertikaler Richtung durch den Rohrstutzen (5) hindurch erstreckt; wobei die andere sekundäre Elektrode eine rohrförmige Elektrode (17) ist, die einen integralen Bestandteil des hohlen Brenners (13) bildet, wobei diese andere sekundäre Elektrode (17) koaxial zu der primären Elektrode (15) angeordnet und im Abstand zu dieser mittels eines isolierenden Ringes (19) gehalten ist, der von einem Loch (21) durchdrungen ist, durch das das Plasma erzeugende Gas in den Innenraum des hohlen Brenners (13) injiziert wird.

7. Plasmareaktor nach Anspruch 6, dadurch gekennzeichnet, daß die Mittel zum Zuführen des pulverförmigen Materiales in den Rohrstutzen (5) eine Gruppe von Öffnungen (29, 29′) um den hohlen Brenner (13) am oberen Ende (7) des Rohrstutzens (5) umfassen, wobei das pulverförmige Material im wesentlichen unter Schwerkrafteinfluß durch die Öffnungen hindurch in den Rohrstutzen (5) in der Nähe dessen innerer Wand (11) zugeführt werden.

## Claims

1. A plasma reactor for use to treat a material in powder form at a very high temperature, said reactor comprising:
- a vertical, electrically insulated sleeve (5) having an upper end (7), a lower end (9) and an internal wall (11) cylindrical in shape;
- a torch (13) coaxially mounted at the upper end (7) of the sleeve (5), said torch comprising at least one electrode (15,17) hereinafter called "primary electrode", that is coaxial with the sleeve (5) and useful for generating a plasma arc column (25,25′);
- means (27,27′,29,29′) for bringing the powder material to be treated into the sleeve (5);
- a crucible (33) positioned under the sleeve (5) to collect the treated particles in molten form that drip down from the lower end (9) of the sleeve (5); and
- another electrode (17,35) hereinafter called "secondary electrode", cooperating with the primary electrode (15,17) of the torch (13) to generate said plasma column (25,25′) when both of said electrodes are connected to an electric power source (39),
characterized in that:
- the torch of the reactor (1) is a hollow torch (13);
- means (21) are provided for injecting a gas tangentially into the hollow torch (13) in order to create a vortex (23) inside the same and thus stabilize the plasma arc column (25,25′) extending from said primary electrode (15,17);
- said means (27,27′,29,29′) for bringing the powder material into the sleeve (5) are devised for bringing and merely letting fall down by gravity the powder material from the upper end (7) of the sleeve (5) around the hollow torch (13) so as to form a substantially uniform cylindrical curtain (31) of particles falling down into the sleeve (5), said particles falling down being centrifugally projected against the internal wall (11) of the sleeve (5) by the vortex (23) escaping from the hollow torch (13) and entirely covering said internal wall (11) to shield the same while said particles are simultaneously being treated by said plasma column (25,25′).

2. The plasma reactor of claim 1, for use to treat an electrically conductive material, characterized in that said secondary electrode (35) is located in the crucible (33) and is in electrical contact with the molten material (37) collected in this crucible (33) so as to cause an arc transfer from said primary electrode (15,17) of the hollow torch (13) to the molten material (37), the plasma arc column (25) that is generated, extending vertically through the sleeve (13).

3. The plasma reactor of claim 2, characterized in that said means for bringing the powder material into the sleeve (5) includes a set of openings (29,29′) located around the hollow torch (13) at the upper end (7) of the sleeve (5) through which the powder material is dropped and falls essentially by gravity, into the sleeve (5) close to the internal (11) wall thereof.

4. The plasma reactor of claim 1, characterized in that the secondary electrode is a tube-shaped electrode (17) forming part of the hollow torch (13), said primary and secondary electrodes (15,17) being coaxial and kept apart from each other by an insulating ring (19) comprising a hole (21) through which the plasma gas is injected into said hollow torch (13).

5. The plasma reactor of claim 4, characterized in that said means for bringing the powder material into the sleeve (5) includes a set of openings (29,29′) located around the hollow torch (13) at the upper end (7) of the sleeve (5), through which the powder material is dropped and falls essentially by gravity, into the sleeve (5), close to the internal wall (11) thereof.

6. The plasma reactor of claim 1, characterized in that it comprises two secondary electrodes (17,35) that can be connected independently to said power source (39) depending of the kind of arc transfer requested for the treatment, one (35) of said secondary electrodes being located in the crucible (33) and in electrical contact with the molten material (37) collected in said crucible (33) to cause an arc transfer from said primary electrode (15) of the hollow torch (13) to the molten material (37) with the generated plasma arc column (25) extending vertically through said sleeve, the other one of said secondary electrodes consisting of a tube-shaped electrode (17) forming part of the hollow torch (13), said other tube-shaped electrode (17) being coaxial with said primary electrode (15) and kept apart from the same by an insulating ring (19) comprising a hole (21) though which the plasma gas is injected into the hollow torch (13).

7. The plasma reactor of claim 6, characterized in that said means for bringing the powder material into the sleeve (5) includes a set of openings (29,29′) located around the hollow torch (13) at the upper end (7) of the sleeve (5), through which the powder material is dropped and falls, essentially by gravity, into the sleeve (5), close to the internal wall (11) thereof.
